# EUROPEAN PATENT SPECIFICATION

(11) **EP 2 752 921 B1**
(45) Date of publication and mention of the grant of the patent: **02.10.2019**
(21) Application number: 12827624.3
(22) Date of filing: 22.08.2012
(51) Int. Cl.: H01M 2/30, H01M 2/20, H01M 2/32, H01M 2/22, H01M 2/06, H01M 2/08

(54) **BATTERY TERMINAL, BATTERY COVER PLATE ASSEMBLY, UNIT BATTERY AND BATTERY GROUP**
BATTERIEKLEMME, BATTERIEABDECKPLATTENANORDNUNG, EINZELBATTERIE UND BATTERIEGRUPPE
BORNE DE BATTERIE, ENSEMBLE PLAQUE DE COUVERCLE DE BATTERIE, BATTERIE UNITAIRE ET GROUPE DE BATTERIES

(30) Priority: 29.08.2011 CN 201120318949 U; 14.12.2011 CN 201110416275
(43) Date of publication of application: 09.07.2014
(73) Proprietor: Shenzhen BYD Auto R&D Company Limited, Guangdong 518118 (CN); BYD Company Limited, Shenzhen, Guangdong 518118 (CN)
(72) Inventor: ZHU, Jianhua, Shenzhen Guangdong 518118 (CN); LAI, Qing, Shenzhen Guangdong 518118 (CN); TONG, Zhiwei, Shenzhen Guangdong 518118 (CN); JIANG, Luxia, Shenzhen Guangdong 518118 (CN)
(74) Representative: m patent group
(86) International application number: PCT/CN2012/080449
(87) International publication number: WO 2013/029484

(56) References cited:
- EP-A1- 2 312 675
- WO-A1-2010/142679
- CN-A- 102 034 952
- CN-A- 102 208 592
- JP-A- 2001 357 834

## Description

### FIELD

The present disclosure relates to the field of battery, particularly, to a battery terminal, a battery cover assembly, a battery and a battery pack.

### BACKGROUND

Power battery packs act as the power source for electric vehicles. Power battery packs can be used in severe environments; therefore there is a relatively high requirement for safety performances for the power battery packs. Generally, a power battery pack may include a plurality of batteries (also referred as battery cells) connected with each other. Traditionally these batteries are connected with each other via a connecting piece. The connection reliability between those batteries may influence the reliability of the power battery pack, therefore there is a demand for improving the connection reliability between those batteries.

EP 2372814A2 relates to a secondary battery including an electrode assembly including a positive electrode, a negative electrode, and a separator therebetween; a case for accommodating the electrode assembly; a cap assembly for sealing the case; and at least one terminal unit including a multi-metal electrode rivet electrically connected to one of the electrodes of the electrode assembly, the multi-metal electrode rivet including a head part and a tail part, and, a rivet terminal being electrically connected to the multi-metal electrode rivet. The rivet terminal and the tail part are formed of the same metallic material, and the head part is formed of a different metallic material.

### SUMMARY

The present application is proposed based on the inventors' finding and awareness of the following facts and problems: the traditional battery connector is made of copper, a positive terminal of a battery is made of aluminum, and a negative terminal of the battery is made of copper. Thus, a copper component (e.g. the battery connector) shall be directly connected with an aluminum component (e.g. the positive terminal of the battery) when two batteries are connected. While an electrolyte solution may be formed in a connection area between the copper component and the aluminum component due to subjecting to the moisture, CO2 and other impurities in the air. Then a primary battery may be formed between the battery connector and the positive terminal, in which the aluminum component may act as a cathode and the copper component may act as an anode. Thus an electrochemical corrosion may take place, which may increase the contact resistance between the copper component and the aluminum component. In addition, the elasticity modulus and the coefficient of thermal expansion of the copper component can be highly different from those of the aluminum component, after several hot/cold thermal cycles performed by connecting with and disconnecting from a power source, a gap may be formed between the copper component and the aluminum component, which may influence the connection between the copper component and the aluminum component and further increase the contact resistance. With the increase of the contact resistance, the temperature increases. Then the oxidation and corrosion may be increased, which causes the formation of a harmful reaction cycle between the copper component and the aluminum component, and the reliability of the connection between these two components may be decreased. Also, with the increase of the temperature, smokes may be generated and the connection may be broken, which may have a disadvantageous influence on the service life and performances of the battery pack.

The present disclosure seeks to solve at least one of the problems existing in the prior art to at least some extent, or to provide a consumer with a useful commercial choice.

The present provides a battery cover plate assembly. The battery cover assembly includes a battery terminal including an outer terminal segment made of a first conductive material, an inner terminal segment made of a second conductive material different from the first conductive material and having an upper end connected to a lower end of the outer terminal segment so as to form a connection portion between the upper end of the inner terminal segment and the lower end of the outer terminal segment, and an anti-corrosion protection member around the connection portion, in which one of the outer terminal segment and the inner terminal segment is made of aluminum, and the other of the outer terminal segment and the inner terminal segment is made of copper, and in which the anti-corrosion protection member is in the form of a protection layer formed by injection molding, spraying or electroplating; a cover plate fitted over the battery terminal; and an insulating member disposed between the cover plate and the battery terminal, in which the connection portion between the inner terminal segment and the outer terminal segment is located above upper end surfaces of the cover plate and the insulating member.

In some embodiments, the inner terminal segment includes a flange on a lower end thereof, in which the cover plate includes a first sleeve part and a first flange part formed on a lower end of the first sleeve part, in which the insulating member includes a second sleeve part fitted over the battery terminal and a second flange part disposed between the flange and the first flange part, and the first sleeve part is fitted over the second sleeve part.

In some embodiments, a radial dimension of the first flange part is larger than those of the second flange part and the flange, and a radial dimension of the second flange part is larger than that of the flange.

In some embodiments, the second sleeve part is fitted over the inner terminal segment, and the upper end of the inner terminal segment is extended out of an upper end of the second sleeve part by a predetermined length.

In some embodiments, a circumferential groove is formed in an external wall of the inner terminal segment, and a portion of the second sleeve part is fitted within the circumferential groove.

In some embodiments, the insulating member further includes a third sleeve part fitted over the first sleeve part, an upper end of the third sleeve part is connected with an upper end of the second sleeve part so as to seal upper ends of gaps formed between the first and second sleeve parts and between the first and third sleeve parts.

In some embodiments, the anti-corrosion protection member is made of at least one material selected from the group consisting of perfluoro(alkoxy alkane) resin, polypropylene, polyphenylene sulfide, polytetrafluoroethylene, polyvinylidene fluoride and polyphenyl ether, preferably the anti-corrosion protection member is made of polypropylene, polyphenylene sulfide, or polyphenyl ether.

In some embodiments, the outer terminal segment and the inner terminal segment are connected via welding or a tenon-mortise connection.

In some embodiments, the outer terminal segment includes a connection boss on an upper end thereof.

The present disclosure further provides a battery. The battery includes: a shell; a battery core accommodated in the shell; and a battery cover plate assembly according to above embodiments disposed on the shell to seal the shell.

The present disclosure further provides a battery pack. The battery pack includes a plurality of batteries according to above embodiments, each of the plurality of batteries including first and second battery terminals having opposite polarities, in which one of the first and second battery terminals is the battery terminal including an outer terminal segment made of a first conductive material, an inner terminal segment made of a second conductive material different from the first conductive material and having an upper end connected to a lower end of the outer terminal segment so as to form a connection portion between the upper end of the inner terminal segment and the lower end of the outer terminal segment, and an anti-corrosion protection member around the connection portion, in which one of the outer terminal segment and the inner terminal segment is made of aluminum, and the other of the outer terminal segment and the inner terminal segment is made of copper, and in which the anti-corrosion protection member is in the form of a protection layer formed by injection molding, spraying or electroplating; and the other of the first and second battery terminals is made of the first conductive material; and a battery connector made of the first conductive material, and having a first end connected with the first battery terminal of a first battery of adjacent batteries and a second end connected with the second battery terminal of a second battery of the adjacent batteries.

In some embodiments, the anti-corrosion protection member is made of at least one material selected from the group consisting of perfluoro(alkoxy alkane) resin, polypropylene, polyphenylene sulfide, polytetrafluoroethylene, polyvinylidene fluoride and polyphenyl ether, preferably the anti-corrosion protection member is made of polypropylene, polyphenylene sulfide, or polyphenyl ether.

In some embodiments, the outer terminal segment and the inner terminal segment are connected via welding or a tenon-mortise connection.

In some embodiments, the outer terminal segment includes a connection boss on an upper end thereof.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of the present disclosure will become apparent and more readily appreciated from the following descriptions taken in conjunction with the drawing, in which:
Fig.1 is a schematic view of a battery cover plate assembly according to an embodiment of the present disclosure, in which a battery terminal according to an embodiment of the present disclosure is shown; and
Fig.2 is a schematic view of a battery pack according to an embodiment of the present disclosure.

### DETAILED DESCRIPTION

Reference will be made in detail to embodiments of the present disclosure; samples of described embodiments are indicated in the drawings. The embodiments described herein with reference to drawings are explanatory, illustrative, and used to generally understand the present disclosure. The embodiments shall not be construed to limit the present disclosure.

In the specification, unless specified or limited otherwise, relative terms such as "central", "longitudinal", "lateral", "front", "rear", "right", "left", "inner", "outer", "lower", "upper", "horizontal", "vertical", "above", "below", "up", "top", "bottom" as well as derivative thereof (e.g., "horizontally", "downwardly", "upwardly", etc.) should be construed to refer to the orientation as then described or as shown in the drawings under discussion. These relative terms are for convenience of description and do not require that the present disclosure be constructed or operated in a particular orientation.

In addition, terms such as "first" and "second" are used herein for purposes of description and are not intended to indicate or imply relative importance or significance. Thus, the feature defined with "first" and "second" may comprise one or more this feature. In the description of the present disclosure, the term "a plurality of' means two or more than two, unless specified otherwise.

Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings. In the description of the present disclosure, it should be understood that, unless specified or limited otherwise, the terms "mounted," "connected," and "coupled" and variations thereof are used broadly and encompass such as mechanical or electrical mountings, connections and couplings, also can be inner mountings, connections and couplings of two components, and further can be direct and indirect mountings, connections, and couplings, which can be understood by those skilled in the art according to the detail embodiment of the present disclosure.

Moreover, a structure in which a first feature is "on" a second feature may include an embodiment in which the first feature directly contacts the second feature, and may also include an embodiment in which an additional feature is formed between the first feature and the second feature so that the first feature does not directly contact the second feature. In addition, a structure in which a first feature is "on" a second feature may include an embodiment in which the first feature directly contacts the second feature, and may also include an embodiment in which an additional feature is formed between the first feature and the second feature so that the first feature does not directly contact the second feature, unless specified otherwise. Furthermore, a first feature "on," "above," or "on top of' a second feature may include an embodiment in which the first feature is right "on," "above," or "on top of' the second feature, and may also include an embodiment in which the first feature is not right "on," "above," or "on top of' the second feature, or just means that the first feature is at a height higher than that of the second feature. While a first feature "beneath," "below," or "on bottom of' a second feature may include an embodiment in which the first feature is right "beneath," "below," or "on bottom of' the second feature, and may also include an embodiment in which the first feature is not right "beneath," "below," or "on bottom of' the second feature, or just means that the first feature is at a height lower than that of the second feature.

The inventors of the present application have found and are aware of that: the traditional battery connector is made of copper, a positive terminal of a battery is made of aluminum, and a negative terminal of the battery is made of copper. Thus, a copper component (the battery connector) should be directly connected with an aluminum component (the positive terminal of the battery) when two batteries are connected. While an electrolyte solution may be formed at a connection area between the copper component and the aluminum component under the moisture, CO2 and other impurities in the air. Thus an electrochemical corrosion may take place, resulting in an increased contact resistance between the copper component and the aluminum component. In addition, after being used for a period of time, a gap may be formed between the copper component and the aluminum component, which may further increase the contact resistance and result in the increase of temperature. Then the oxidation and corrosion may be serious, which causes the formation of a harmful reaction cycle between the copper component and the aluminum component, and the reliability of the connection between these two components may be decreased. Also, with the increasing of the temperature, smokes may be generated and the connection may be broken, which may have a disadvantageous influence on the service life and performances of the battery pack.

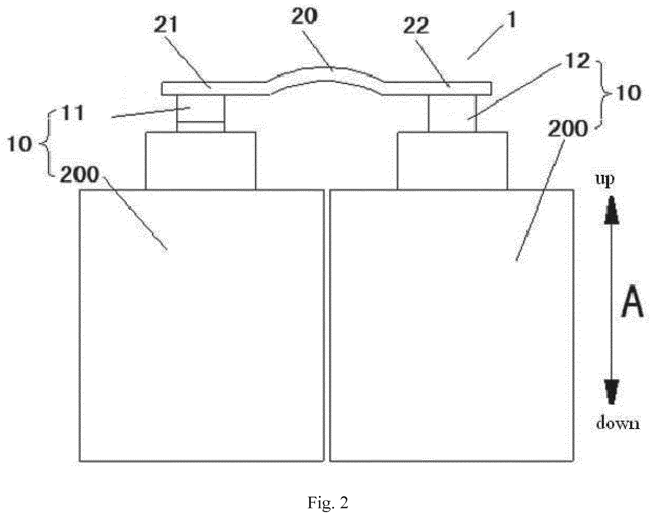

A battery pack 1 according to embodiments of the present disclosure will be described below with reference to Fig.2. As shown in Fig. 2, the battery pack 1 includes a battery connector 20 and a plurality of batteries 10 (the battery 10 is also referred as a single battery or a batter cell).

Each battery 10 includes a first terminal 11 and a second terminal 12 having opposite polarities, i.e., the first terminal 11 has a polarity opposite to that of the second terminal 12. In some embodiments of the present disclosure, one of the first terminal 11 and the second terminal 12 is the battery terminal 110 according to embodiments of the present disclosure, and the other of the first terminal 11 and the second terminal 12 is made of the first conductive material.

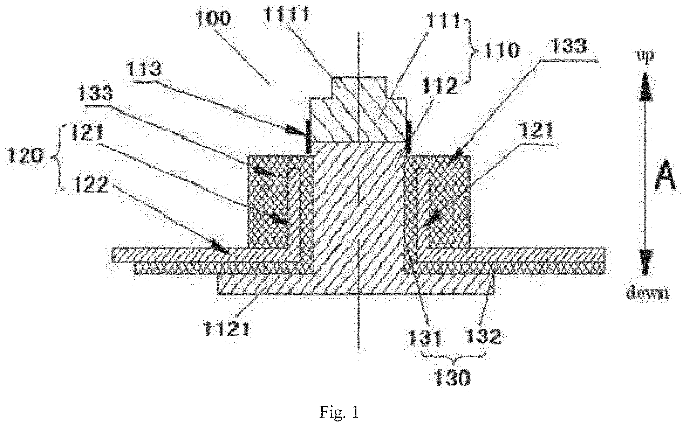

The battery terminal 110 according to embodiments of the present disclosure will be described below with reference to Fig.1. As shown in Fig. 1, the battery terminal 110 includes an outer terminal segment 111, an inner terminal segment 112 and a protection member 113.

The outer terminal segment 111 is made of a first conductive material. As shown in Fig. 1, the outer terminal segment 111 is a part of the battery terminal 110 which is far away from a battery core (not shown in Fig. 1), and the inner terminal segment 112 is a part of the battery terminal 110 which is proximal to the battery core. There are no particular limitations to the lengths of the outer terminal segment 111 and the inner terminal segment 112, and the lengths may be adjusted as desired. An upper end of the inner terminal segment 112 is connected to a lower end of the outer terminal segment 111 so as to form a connection portion between the inner and outer terminal segments 112, 111, and the inner terminal segment 112 is made of a second conductive material that is different from the first conductive material. The protection member 113 wraps around the connection portion between the inner terminal segment 112 and the outer terminal segment 111. In some embodiments, the protection member 113 may wrap around a part of the inner and/or outer terminal segments 112, 111 which is adjacent to the connection portion. In embodiments of the present disclosure, the up and down direction is indicated by an arrow A as shown in Figs. 1-2.

The battery connector 20 is made of the first conductive material. A first end 21 of the battery connector 20 is connected with a first battery terminal 11 of a first battery of adjacent batteries 10, and a second end 22 of the battery connector 20 is connected with a second battery terminal 12 of a second battery of the adjacent batteries 10.

In the following description, By way of example and without limitation, the first battery terminal 11 is described as the above battery terminal 110. The first end 21 of the battery connector 20 is connected with the outer terminal segment 111 of the first battery terminal 11 of one of two adjacent batteries 10, and the second end 22 of the battery connector 20 is connected with the second battery terminal 12 of the other of the two adjacent batteries 10, then the two adjacent batteries 10 are connected in series. It will be appreciated by those skilled in the art that, the battery pack 1 according to embodiments of the present disclosure may also include batteries connected in parallel. In other words, the batteries in the battery pack 1 may be connected in series, or some batteries are connected in series and some batteries are connected in parallel.

According to embodiments of the present disclosure, the outer terminal segment 111 of the battery terminal 110 is made of the first conductive material, when first and second batteries (for example, adjacent batteries 10) are connected, the first end 21 of the battery connector 20 may be connected with the outer terminal segment 111, which is made of the first conductive material, of one of the first battery terminal 11 and the second battery terminal 12 of the first battery, and the second end 22 of the battery connector 20 may be connected with the other, which is made of the first conductive material, of the first battery terminal 11 and the second battery terminal 12 of the second battery. Therefore, the electrolyte solution may not be formed between the battery connector 20 and the outer terminal segment 111 of one of the first battery terminal 11 and the second battery terminal 12 of the first battery, and between the battery connector 20 and the other of the first battery terminal 11 and the second battery terminal 12 of the second battery, under the moisture, CO2 and other impurities in the air. Thus, the primary battery may not be formed between the battery connector 20 and the outer terminal segment 111 of one of the first battery terminal 11 and the second battery terminal 12 of the first battery, and between the battery connector 20 and the other of the first battery terminal 11 and the second battery terminal 12 of the second battery. Then the electrochemical corrosion on the battery may be avoided. In this way, the increase of contact resistances between the battery connector 20 and the outer terminal segment 111 of one of the first battery terminal 11 and the second battery terminal 12 of the first battery, and between the battery connector 20 and the other of the first battery terminal 11 and the second battery terminal 12 of the second battery may be prevented.

In addition, the battery connector 20, the outer terminal segment 111 of one of the first battery terminal 11 and the second battery terminal 12 of the first battery, and the other of the first battery terminal 11 and the second battery terminal 12 of the second battery are all made of the first conductive material, therefore the battery connector 20 may have the same elasticity modulus and coefficient of thermal expansion with those of the outer terminal segment 111 of one of the first battery terminal 11 and the second battery terminal 12 of the first battery, and the battery connector 20 may also have the same elasticity modulus and coefficient of thermal expansion with those of the other of the first battery terminal 11 and the second battery terminal 12 of the second battery. Thus, after several hot/cold thermal cycles performed by connecting with and disconnecting from a power source, the gap may not be formed between the battery connector 20 and the outer terminal segment 111 of one of the first battery terminal 11 and the second battery terminal 12 of the first battery, as well as between the battery connector 20 and the other of the first battery terminal 11 and the second battery terminal 12 of the second battery. Therefore, the increase of the contact resistances between the battery connector 20 and the outer terminal segment 111 of one of the first battery terminal 11 and the second battery terminal 12 of the first battery, as well as between the battery connector 20 and the other of the first battery terminal 11 and the second battery terminal 12 of the second battery may be prevented.

Therefore, with the battery terminal 110, the increase of temperature between the battery connector 20 and the battery 10 may be avoided, adjacent batteries 10 may be connected with each other more stably, and the performance and service life of the battery pack 1 including a plurality of those batteries 10 may be improved.

In some embodiments, since the inner terminal segment 112 and the outer terminal segment 111 are made of different conductive materials, an electrolyte solution may be formed at the connection portion between the inner terminal segment 112 and the outer terminal segment 111 under the moisture, CO2 and other impurities in the air. Thus an electrochemical corrosion may not take place at the connection portion between the inner terminal segment 112 and the outer terminal segment 111. In some embodiments of the present disclosure, The protection member 113 may wrap around the connection portion between the inner terminal segment 112 and the outer terminal segment 111, thus the connection portion between the inner terminal segment 112 and the outer terminal segment 111 is prevented from directly contacting with the moisture, CO2 and other impurities in the air. In this way, the electrochemical corrosion in the contacting portion may be avoided. Then the service life of the battery 10 may be increased, and the connection between those batteries 10 is more stable.

The battery pack 10 according to embodiments of the present disclosure may have a stable structure, stable performances and a long service life.

In an embodiment of the present disclosure, the protection member 113 is in the form of a protection layer formed via injection molding, spraying or electroplating. Then the protection member 113 may be easy to manufacture and low in manufacturing cost.

Specifically, the protection member 113 may be made of at least one selected from the group consisting of: perfluoro(alkoxy alkane) resin (PFA), polypropylene (PP), polyphenylene sulfide (PPS), polytetrafluoroethylene (PTFE), polyvinylidene fluoride (PVDF) and polyphenyl ether (PPO). Then the cost for manufacturing the protection member 113 may be reduced and a protection effect of the protection member 113 may be improved. In addition, the protection member 113 may protect the connection portion between the inner terminal segment 112 and the outer terminal segment 111 even after a long term use.

In an embodiment, the protection member 113 may be made of at least one selected from the group consisting of: PP, PPS and PPO. Then the cost for manufacturing the protection member 113 may be further reduced and a protection effect of the protection member 113 may be further improved. In addition, the protection member 113 may protect the connection portion between the inner terminal segment 112 and the outer terminal segment 111 even after a long term use. In an embodiment of the present disclosure, the protection member 113 is in the form of a protection layer, such as a nickel layer or a silver layer, formed by electroplating.

In some embodiments of the present disclosure, one of the outer terminal segment 111 and the inner terminal segment 112 is made of aluminum, and the other of the outer terminal segment 111 and the inner terminal segment 112 is made of copper. It will be appreciated that the term "aluminum" may refer to pure aluminum or aluminum alloy, and the term "copper" may refer to pure copper and copper alloy.

For example, the battery terminal 110 is a positive battery terminal, the inner terminal segment 112 may be made of aluminum, the outer terminal segment 111 may be made of copper, the battery connector 20 may be made of copper, and the other of the first battery terminal 11 and the second battery terminal 12 may be made of copper. Alternatively, in an embodiment, the battery terminal 110 is a negative battery terminal, the inner terminal segment 112 may be made of copper, the outer terminal segment 111 may be made of aluminum, the battery connector 20 may be made of aluminum, and the other of the first battery terminal 11 and the second battery terminal 12 may be made of aluminum.

As shown in Fig. 1, in an embodiment, the battery terminal 110 has a circular cross section. In other words, the inner terminal segment 112 may have a circular cross section and the outer terminal segment 111 may also have a circular cross section. That is, the battery terminal 110 may have a cylindrical shape, the inner terminal segment 112 may have a cylindrical shape and the outer terminal segment 111 may also have a cylindrical shape. Then the battery terminal 110 may be fitted with the cover plate 120 more easily.

In some embodiments of the present disclosure, the battery connector 20 may connect with the first battery terminal 11 and the second battery terminal 12 via a riveting, a threaded connection, or welding. Then the battery connector 20 may be firmly connected with the first battery terminal 11 and the second battery terminal 12, and the difficulty and cost for manufacturing the battery pack 1 may be decreased. In some embodiments, the battery connector 20 may connect with the first battery terminal 11 and the second battery terminal 12 via welding, such as explosion welding, friction welding, and brazing. Then the contact resistances between the battery connector 20 and the first battery terminal 11 and between the battery connector 20 and the second battery terminal 12 may be decreased effectively.

In an embodiment of the present disclosure, the inner terminal segment 112 may be connected with the outer terminal segment 111 via welding. Then the inner terminal segment 112 may be firmly connected with the outer terminal segment 111, and the difficulty and cost for manufacturing the battery pack may be decreased. In some embodiments, the inner terminal segment 112 may be connected with the outer terminal segment 111 via explosion welding, friction welding, or brazing.

In an embodiment of the present disclosure, the outer terminal segment 111 and the inner terminal segment 112 are connected via a tenon-mortise connection. Then the outer terminal segment 111 and the inner terminal segment 112 may be easily connected.

The proportion such as the length ratio between the outer terminal segment 111 and the inner terminal segment 112 may be determined as desired. In an embodiment, the battery terminal 110 is a positive terminal, then the proportion such as the length of the inner terminal segment 112 may be increased and the proportion such as the length of the outer terminal segment 111 may be decreased. In an embodiment, the battery terminal 110 is a negative terminal, then the proportion of the inner terminal segment 112 may be decreased and the proportion of the outer terminal segment 111 may be increased. In addition, the proportion between the outer terminal segment 111 and the inner terminal segment 112 may be determined according to requirements of the battery 10 for the battery terminal 110. In an embodiment, the battery terminal is used in a condition in which the current is relatively high, then the proportion of the inner terminal segment 112 may be decreased and the proportion of the outer terminal segment 111 may be increased.

As shown in Fig. 1, in an embodiment of the present disclosure, the outer terminal segment 111 includes a connection boss 1111 on an upper end surface thereof. Then the outer terminal segment 111 may be connected to the battery connector 20 more easily and firmly by means of he connection boss 1111. The connection boss 1111 may have a circular cross section. In other words, the connection boss 1111 may have a cylindrical shape. The connection boss 1111 may be formed at the upper end surface of the outer terminal segment 111 by welding, or the connection boss 1111 may be integrally formed with the outer terminal segment 111.

The battery 10 according to embodiments of the present disclosure will be described below with reference to Fig.2. As shown in Fig. 2, the battery 10 includes a shell 200, a battery core (not shown in Fig.2) accommodated in the shell 200, and a battery cover plate assembly 100.

The battery cover plate assembly 100 according to embodiments of the present disclosure will be described below with reference to Fig.1. As shown in Fig. 1, the battery cover plate assembly 100 includes a battery terminal, a cover plate 120 and an insulating member 130. The battery terminal is the battery terminal 110 described above. The cover plate 120 is fitted over the battery terminal 110. The insulating member 130 is disposed between the cover plate 120 and the battery terminal 110.

The battery cover plate assembly 100 is mounted on the shell 200 to seal the shell 200. In Fig. 1, only one battery terminal 110 is shown. It will be appreciated that, the battery cover plate assembly 100 may include two battery terminals 110. In other words, two battery terminals 110 of the battery with the battery cover plate assembly 100 are disposed on the same side. In an embodiment, one battery may include two battery cover plate assemblies 100, and each battery cover plate assembly 100 includes one battery terminal 110. The battery terminal 110 of one battery cover plate assembly 100 may be used as a positive terminal, and the battery terminal 110 of the other battery cover plate assembly 100 may be used as a negative terminal.

According to embodiments of the present disclosure, the battery cover plate assembly 100 includes the battery terminal 110 described above, therefore the increase of contact resistance between the battery connector 20 and the battery 10 may be prevented, and thus the increase of temperature between the battery connector 20 and the battery 10 including this battery cover plate assembly 100 may be prevented. Thus, adjacent batteries 10 may be connected with each other more stably, and the performance and service life of the battery pack 1 including a plurality of those batteries may be improved.

According to embodiments of the present disclosure, with the battery cover plate assembly 100, the battery 10 may have a stable structure and a long service life, and the connection between batteries 10 may be stable.

As shown in Fig. 1, in some embodiments of the present disclosure, the connection portion between the inner terminal segment 112 and the outer terminal segment 111 is located above upper surfaces of the cover plate 120 and the insulating member 30. Then the connection portion between the inner terminal segment 112 and the outer terminal segment 111 may be kept away from an electrolyte solution received in the battery 10, therefore an electro-corrosion between the battery terminal 110 and the battery core may be avoided.

In some embodiments of the present disclosure, the cover plate 120, the insulating member 130 and the battery terminal 110 may be assembled together via injection molding. Then the difficulty and cost for manufacturing the battery cover plate assembly 100 may be decreased. In addition, the cover plate 120, the insulating member 130 and the battery terminal 110 may be assembled together via a threaded connection, a riveting or an adhering connection.

As shown in Fig. 1, in some embodiments of the present disclosure, the inner terminal segment 112 includes a flange 1121 on a lower end thereof. The cover plate 120 includes a first sleeve part 121 and a first flange part 122 disposed at a lower end of the first sleeve part 121. The insulating member 130 includes a second sleeve part 131 fitted over the battery terminal 110 and a second flange part 132 disposed between the flange 1121 and the first flange part 122. The first sleeve part 121 is fitted over the second sleeve part 131. That is, the inner terminal segment 112 may be disposed within the second sleeve part 131, and the second sleeve part 131 may be disposed within the first sleeve part 121. Then the battery cover plate assembly 100 may have a simple and stable structure.

In an embodiment of the present disclosure, the first sleeve part 121 and the second sleeve part 131 may both have a circular cross-section. The first flange part 122 and the second flange part 132 may both have a circular cross-section.

As shown in Fig. 1, in an embodiment of the present disclosure, a radial dimension such as a diameter of the first flange part 122 is larger than that of the second flange part 132, and a radial dimension such as a diameter of the second flange part 132 is larger than that of the flange 1121. In other words, an outer edge of the second flange part 132 may be more close to the inner terminal segment 112 than that of the first flange part 122, and an outer edge of the flange 1121 may be more close to the inner terminal segment 112 than that of the second flange part 132. Then the battery terminal 110 and the cover plate 120 may be isolated from each other by the insulating member 130 more completely, therefore the battery 10 may be more stable.

In an embodiment of the present disclosure, the second sleeve part 131 is fitted over the inner terminal segment 112. The upper end of the inner terminal segment 112 is extended out of an upper end of the second sleeve part 131. Then the inner terminal segment 112 and the outer terminal segment 111 may be connected with each other more easily, and the protection member 113 may wrap around the connection portion between the inner terminal segment 112 and the outer terminal segment 111 more easily.

As shown in Fig. 1, in an embodiment of the present disclosure, a circumferential groove is formed in an external wall of the inner terminal segment 112, and a portion of the second sleeve part 131 is fitted within the circumferential groove. Then the second sleeve part 131 may be connected with the inner terminal segment 112 more easily and steadily.

In some embodiments of the present disclosure, the insulating member 130 further includes a third sleeve part 133 fitted over the first sleeve part 121, and an upper end of the third sleeve part 133 is connected with an upper end of the second sleeve part 131 so as to seal upper ends of gaps formed between the first and second sleeve parts 121, 131 and between the first and third sleeve parts 121, 133. Then the battery terminal 110 and the cover plate 120 may be isolated from each other by the insulating member 130 more completely, therefore the battery 10 may be more stable.

In some embodiments, the cover plate 120 may be made of plastics, aluminum, or stainless steel. Then the cover plate 120 may be lower in cost. In some embodiments, the insulating member 130 may be made of at least one selected from the group consisting of: perfluoro(alkoxy alkane) resin (PFA), polypropylene (PP), polyphenylene sulfide (PPS), polytetrafluoroethylene (PTFE), polyvinylidene fluoride (PVDF) and polyphenyl ether (PPO). Then the cost for manufacturing the insulating member 130 may be reduced and an insulating effect of the insulating member 130 may be improved. In addition, the insulating member 130 may isolate the battery terminal 110 from the cover plate 120 efficiently even after a long term use, therefore the battery 10 may be more stable.

In some embodiments, the insulating member 130 may be made of at least one selected from the group consisting of: PP, PPS and PPO. Then the cost for manufacturing the insulating member 130 may be further reduced and the insulating effect of the insulating member 130 may be further improved. In addition, the insulating member 130 may isolate the battery terminal 110 from the cover plate 120 even after a long term use efficiently, therefore the battery 10 may be more stable.

With the battery terminal 110 according to embodiments of the present disclosure, adjacent batteries 10 may be connected with each other more stably, and the performance and service life of the battery pack including a plurality of those batteries 10 may be improved.

Reference throughout this specification to "an embodiment," "some embodiments," "an embodiment", "another example," "an example," "a specific example," or "some examples," means that a particular feature, structure, material, or characteristic described in connection with the embodiment or example is included in at least an embodiment or example of the present disclosure. Thus, the appearances of the phrases such as "in some embodiments," "in an embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory Examples have been shown and described, it would be appreciated by those skilled in the art that the above Examples cannot be construed to limit the present disclosure, and changes, alternatives, and modifications can be made in the Examples without departing from the scope of the present claims.

## Claims

1. A battery cover plate assembly (100), comprising:
a battery terminal (110), comprising:
an outer terminal segment (111) made of a first conductive material;
an inner terminal segment (112) made of a second conductive material different from the first conductive material and having an upper end connected to a lower end of the outer terminal segment (111) so as to form a connection portion between the upper end of the inner terminal segment (112) and the lower end of the outer terminal segment (111); and
an anti-corrosion protection member (113) around the connection portion;
wherein one of the outer terminal segment (111) and the inner terminal segment (112) is made of aluminum, and the other of the outer terminal segment (111) and the inner terminal segment (112) is made of copper; the anti-corrosion protection member (113) is in the form of a protection layer formed by injection molding, spraying or electroplating; and
a cover plate (120) fitted over the battery terminal (110);
an insulating member (130) disposed between the cover plate (120) and the battery terminal (110),
wherein the connection portion between the inner terminal segment (112) and the outer terminal segment (111) is located above upper end surfaces of the cover plate (120) and the insulating member (130).

2. The battery cover plate assembly (100) of claim 1, wherein the inner terminal segment (112) comprises a flange (1121) on a lower end thereof,
wherein the cover plate (120) comprises a first sleeve part (121) and a first flange part (122) formed on a lower end of the first sleeve part (121),
wherein the insulating member (130) comprises a second sleeve part (131) fitted over the battery terminal (110) and a second flange part (132) disposed between the flange (1121) and the first flange part (122), and the first sleeve part (121) is fitted over the second sleeve part (131).

3. The battery cover plate assembly (100) of claim 2, wherein a radial dimension of the first flange part (122) is larger than those of the second flange part (132) and the flange (1121), and a radial dimension of the second flange part (132) is larger than that of the flange (1121).

4. The battery cover plate assembly (100) of claim 2, wherein the second sleeve part (131) is fitted over the inner terminal segment (112), and the upper end of the inner terminal segment (112) is extended out of an upper end of the second sleeve part (131) by a predetermined length.

5. The battery cover plate assembly of claim 4, wherein a circumferential groove is formed in an external wall of the inner terminal segment (112), and a portion of the second sleeve part (131) is fitted within the circumferential groove.

6. The battery cover plate assembly (100) of claim 1, wherein the insulating member (130) further comprises a third sleeve part (133) fitted over the first sleeve part (121), an upper end of the third sleeve part (133) is connected with an upper end of the second sleeve part (131) so as to seal upper ends of gaps formed between the first and second sleeve parts (121, 131) and between the first and third sleeve parts (121, 133).

7. The battery cover plate assembly (100) of claim 1, wherein the anti-corrosion protection member (113) is made of at least one material selected from the group consisting of perfluoro(alkoxy alkane) resin, polypropylene, polyphenylene sulfide, polytetrafluoroethylene, polyvinylidene fluoride and polyphenyl ether, preferably the anti-corrosion protection member is made of polypropylene, polyphenylene sulfide, or polyphenyl ether.

8. The battery cover plate assembly (100) of claim 1, wherein the outer terminal segment (111) and the inner terminal segment (112) are connected via welding or a tenon-mortise connection.

9. The battery cover plate assembly (100) of claim 1, wherein the outer terminal segment (111) comprises a connection boss (1111) on an upper end thereof.

10. A battery (10), comprising:
a shell (200);
a battery core accommodated in the shell (200); and
a battery cover plate assembly (100) according to any one of claims 1-9 disposed on the shell (200) to seal the shell (200).

11. A battery pack, comprising:
a plurality of batteries (10) according to claim 10, each of the plurality of batteries (10) comprising first and second battery terminals (11, 12) having opposite polarities, wherein one of the first and second battery terminals (11, 12) is a battery terminal (110) comprising:
an outer terminal segment (111) made of a first conductive material;
an inner terminal segment (112) made of a second conductive material different from the first conductive material and having an upper end connected to a lower end of the outer terminal segment (111) so as to form a connection portion between the upper end of the inner terminal segment (112) and the lower end of the outer terminal segment (111); and
an anti-corrosion protection member (113) around the connection portion; wherein one of the outer terminal segment (111) and the inner terminal segment (112) is made of aluminum, and the other of the outer terminal segment (111) and the inner terminal segment (112) is made of copper; and wherein the anti-corrosion protection member (113) is in the form of a protection layer formed by injection molding, spraying or electroplating; and the other of the first and second battery terminals (11, 12) is made of the first conductive material; and
a battery connector (20) made of the first conductive material, and having a first end connected with the first battery terminal (11) of a first battery of adjacent batteries and a second end connected with the second battery terminal (12) of a second battery of the adjacent batteries.

12. The battery pack of claim 11, wherein the anti-corrosion protection member (113) is made of at least one material selected from the group consisting of perfluoro(alkoxy alkane) resin, polypropylene, polyphenylene sulfide, polytetrafluoroethylene, polyvinylidene fluoride and polyphenyl ether, preferably the anti-corrosion protection member is made of polypropylene, polyphenylene sulfide, or polyphenyl ether.

13. The battery pack of claim 11, wherein the outer terminal segment (111) and the inner terminal segment (112) are connected via welding or a tenon-mortise connection.

14. The battery pack of claim 11, wherein the outer terminal segment (111) comprises a connection boss (1111) on an upper end thereof.

## Patentansprüche

1. Batterieabdeckplattenanordnung (100), umfassend:
einen Batterieanschluss (110), umfassend:
ein äußeres Anschlusssegment (111) aus einem ersten leitenden Material;
ein inneres Anschlusssegment (112) aus einem zweiten leitenden Material, das sich von dem ersten leitenden Material unterscheidet und ein oberes Ende aufweist, das mit einem unteren Ende des äußeren Anschlusssegments (111) verbunden ist, um einen Verbindungsabschnitt zwischen dem oberen Ende des inneren Anschlusssegments (112) und dem unteren Ende des äußeren Anschlusssegments (111) zu bilden; und
ein Korrosionsschutzelement (113) um den Verbindungsabschnitt herum;
wobei eines des äußeren Anschlusssegments (111) und des inneren Anschlusssegments (112) aus Aluminium und das andere des äußeren Anschlusssegments (111) und des inneren Anschlusssegments (112) aus Kupfer hergestellt ist; das Korrosionsschutzelement (113) in Form einer durch Spritzgießen, Sprühen oder Galvanisieren gebildeten Schutzschicht ausgebildet ist; und
eine Abdeckplatte (120), die über dem Batterieanschluss (110) angebracht ist;
ein Isolierelement (130), das zwischen der Abdeckplatte (120) und dem Batterieanschluss (110) angeordnet ist,
wobei der Verbindungsabschnitt zwischen dem inneren Anschlusssegment (112) und dem äußeren Anschlusssegment (111) oberhalb oberer Endflächen der Abdeckplatte (120) und des Isolierelements (130) angeordnet ist.

2. Batterieabdeckplattenanordnung (100) nach Anspruch 1, wobei das innere Anschlusssegment (112) einen Flansch (1121) an einem unteren Ende davon umfasst,
wobei die Abdeckplatte (120) einen ersten Hülsenteil (121) und einen ersten Flanschteil (122) umfasst, der an einem unteren Ende des ersten Hülsenteils (121) ausgebildet ist,
wobei das Isolierelement (130) einen zweiten Hülsenteil (131), der über dem Batterieanschluss (110) angebracht ist, und einen zweiten Flanschteil (132) umfasst, der zwischen dem Flansch (1121) und dem ersten Flanschteil (122) angeordnet ist, und der erste Hülsenteil (121) über dem zweiten Hülsenteil (131) angebracht ist.

3. Batterieabdeckplattenanordnung (100) nach Anspruch 2, wobei eine radiale Abmessung des ersten Flanschteils (122) größer ist als die des zweiten Flanschteils (132) und des Flansches (1121) und eine radiale Abmessung des zweiten Flanschteils (132) größer ist als die des Flansches (1121).

4. Batterieabdeckplattenanordnung (100) nach Anspruch 2, wobei das zweite Hülsenteil (131) über dem inneren Anschlusssegment (112) angebracht ist und das obere Ende des inneren Anschlusssegments (112) aus einem oberen Ende des zweiten Hülsenteils (131) um eine vorbestimmte Länge herausragt.

5. Batterieabdeckplattenanordnung nach Anspruch 4, wobei eine Umfangsnut in einer Außenwand des inneren Anschlusssegments (112) ausgebildet ist und ein Abschnitt des zweiten Hülsenteils (131) in die Umfangsnut eingepasst ist.

6. Batterieabdeckplattenanordnung (100) nach Anspruch 1, wobei das Isolierelement (130) ferner einen dritten Hülsenteil (133) umfasst, der über dem ersten Hülsenteil (121) angebracht ist, wobei ein oberes Ende des dritten Hülsenteils (133) mit einem oberen Ende des zweiten Hülsenteils (131) verbunden ist, um die oberen Enden der zwischen dem ersten und zweiten Hülsenteil (121, 131) und zwischen dem ersten und dritten Hülsenteil (121, 133) gebildeten Lücken abzudichten.

7. Batterieabdeckplattenanordnung (100) nach Anspruch 1, wobei das Korrosionsschutzelement (113) aus zumindest einem Material, ausgewählt aus der Gruppe bestehend aus Perfluor(alkoxyalkan)harz, Polypropylen, Polyphenylensulfid, Polytetrafluorethylen, Polyvinylidenfluorid und Polyphenylether, vorzugsweise aus Polypropylen, Polyphenylensulfid oder Polyphenylether hergestellt ist.

8. Batterieabdeckplattenanordnung (100) nach Anspruch 1, wobei das äußere Anschlusssegment (111) und das innere Anschlusssegment (112) mittels Schweißen oder einer Zapfenverbindung verbunden sind.

9. Batterieabdeckplattenanordnung (100) nach Anspruch 1, wobei das äußere Anschlusssegment (111) einen Anschlussbolzen (1111) an seinem oberen Ende aufweist.

10. Batterie (10), umfassend:
ein Gehäuse (200);
einen Batteriekern, der in dem Gehäuse (200) untergebracht ist; und
eine Batterieabdeckplattenanordnung (100) nach einem der Ansprüche 1-9, die auf dem Gehäuse (200) angeordnet ist, um das Gehäuse (200) abzudichten.

11. Batteriepack, umfassend:
eine Vielzahl von Batterien (10) nach Anspruch 10, wobei jede der Vielzahl von Batterien (10) erste und zweite Batterieanschlüsse (11, 12) mit entgegengesetzten Polaritäten umfasst, wobei einer des ersten und des zweiten Batterieanschlusses (11, 12) ein Batterieanschluss (110) ist, der umfasst:
ein äußeres Anschlusssegment (111) aus einem ersten leitenden Material;
ein inneres Anschlusssegment (112) aus einem zweiten leitenden Material, das sich vom ersten leitenden Material unterscheidet, das ein oberes Ende aufweist, das mit einem unteren Ende des äußeren Anschlusssegments (111) verbunden ist, um einen Verbindungsabschnitt zwischen dem oberen Ende des inneren Anschlusssegments (112) und dem unteren Ende des äußeren Anschlusssegments (111) zu bilden; und
ein Korrosionsschutzelement (113) um den Verbindungsabschnitt herum; wobei eines des äußeren Anschlussssegments (111) und des inneren Anschlusssegments (112) aus Aluminium und das andere des äußeren Anschlusssegments (111) und des inneren Anschlusssegments (112) aus Kupfer hergestellt ist; und wobei das Korrosionsschutzelement (113) in Form einer durch Spritzgießen, Sprühen oder Galvanisieren gebildeten Schutzschicht ausgebildet ist; und das andere des ersten und des zweiten Batterieanschlusses (11, 12) aus dem ersten leitenden Material hergestellt ist; und
einen Batterieverbinder (20) aus dem ersten leitfähigen Material mit einem ersten Ende, das mit dem ersten Batterieanschluss (11) einer ersten Batterie benachbarter Batterien verbunden ist, und einem zweiten Ende, das mit dem zweiten Batterieanschluss (12) einer zweiten Batterie der benachbarten Batterien verbunden ist.

12. Batteriepack nach Anspruch 11, wobei das Korrosionsschutzelement (113) aus zumindest einem Material, ausgewählt aus der Gruppe bestehend aus Perfluor(alkoxyalkan)harz, Polypropylen, Polyphenylensulfid, Polytetrafluorethylen, Polyvinylidenfluorid und Polyphenylether, vorzugsweise aus Polypropylen, Polyphenylensulfid oder Polyphenylether, hergestellt ist.

13. Batteriepack nach Anspruch 11, wobei das äußere Anschlusssegment (111) und das innere Anschlusssegment (112) mittels Schweißen oder einer Zapfenverbindung verbunden sind.

14. Batteriepack nach Anspruch 11, wobei das äußere Anschlusssegment (111) einen Anschlussbolzen (1111) an seinem oberen Ende aufweist.

## Revendications

1. Assemblage de plaque de recouvrement de batterie (100) comportant :
une borne de batterie (110) comportant:
un segment de borne externe (111) fabriqué d'un premier matériau conducteur ;
un segment de borne interne (112) fabriqué d'un second matériau conducteur différent dudit premier matériau conducteur et ayant une extrémité supérieure connectée à une extrémité inférieure dudit segment de borne externe (111) pour former une partie de connexion entre ladite extrémité supérieure dudit segment de borne interne (112) et ladite extrémité inférieure dudit segment de borne externe (111) ; et
un élément de protection contre la corrosion (113) autour de ladite partie de connexion ;
l'un dudit segment de borne externe (111) et dudit segment de borne interne (112) étant fabriqué en aluminium et l'autre dudit segment de borne externe (111) et dudit segment de borne interne (112) étant fabriqué en cuivre ; ledit élément de protection contre la corrosion (113) étant formé sous la forme d'une couche protectrice formée par moulage par injection, pulvérisation ou dépôt électrolytique ; et
une plaque de recouvrement (120) montée sur ladite borne de batterie (110) ;
un élément isolant (130) disposé entre ladite plaque de recouvrement (120) et ladite borne de batterie (110),
dans lequel la partie de connexion entre ledit segment de borne interne (112) et ledit segment de borne externe (111) est disposée au-dessus des surfaces d'extrémité supérieures de ladite plaque de recouvrement (120) et dudit élément isolant (130).

2. Assemblage de plaque de recouvrement de batterie (100) selon la revendication 1, dans lequel le segment de borne interne (112) comprend une bride (1121) à une extrémité inférieure de celle-ci,
ladite plaque de recouvrement (120) comportant une première partie de manchon (121) et une première partie de bride (122) formée à une extrémité inférieure de ladite première partie de manchon (121),
ledit élément isolant (130) comportant une deuxième partie de manchon (131) montée sur ladite borne de batterie (110) et une deuxième partie de bride (132) disposée entre ladite bride (1121) et ladite première partie de bride (122), ladite première partie de manchon (121) étant montée sur ladite deuxième partie de manchon (131).

3. Assemblage de plaque de recouvrement de batterie (100) selon la revendication 2, dans lequel une dimension radiale de ladite première partie de bride (122) est supérieure à celle de ladite deuxième partie de bride (132) et à celle de ladite bride (1121) et une dimension radiale de ladite deuxième partie de bride (132) est supérieure à celle de ladite bride (1121).

4. Assemblage de plaque de recouvrement de batterie (100) selon la revendication 2, dans lequel ladite deuxième partie de manchon (131) est montée sur ledit segment de borne interne (112) et ladite extrémité supérieure dudit segment de borne interne (112) dépasse d'une extrémité supérieure de ladite deuxième partie de manchon (131) par une longueur prédéterminée.

5. Assemblage de plaque de recouvrement de batterie selon la revendication 4, dans lequel une rainure périphérique est formée dans une paroi extérieure dudit segment de borne interne (112) et une partie de ladite deuxième partie de manchon (131) est montée dans ladite rainure périphérique.

6. Assemblage de plaque de recouvrement de batterie (100) selon la revendication 1, ledit élément isolant (130) comportant en outre une troisième partie de manchon (133) montée sur ladite première partie de manchon (121), une extrémité supérieure de ladite troisième partie de manchon (133) étant reliée à une extrémité supérieure de ladite deuxième partie de manchon (131) pour sceller les extrémités supérieures des espaces formés entre lesdites première et deuxième parties de manchon (121, 131) et entre lesdites première et troisième parties de manchon (121, 133).

7. Assemblage de plaque de recouvrement de batterie (100) selon la revendication 1, dans lequel ledit élément de protection contre la corrosion (113) est fabriqué d'au moins un matériau choisi dans le groupe constitué par la résine perfluoro(alcoxyalcane), le polypropylène, polysulfure de phénylène, le polytétrafluoroéthylène, le polyfluorure de vinylidène et le polyphényléther, de préférence du polypropylène, du polysulfure de phénylène ou du polyphényléther.

8. Assemblage de plaque de recouvrement de batterie (100) selon la revendication 1, dans lequel ledit segment de borne externe (111) et ledit segment de borne interne (112) sont reliés par soudage ou par un joint à tenon.

9. Assemblage de plaque de recouvrement de batterie (100) selon la revendication 1, dans lequel ledit segment de borne externe (111) comporte un boulon de borne (1111) à son extrémité supérieure.

10. Batterie (10) comportant :
un boîtier (200) ;
un noyau de batterie logé dans ledit boitier (200) ; et
un assemblage de plaque de recouvrement de batterie (100) selon l'une des revendications 1-9 disposé sur ledit boîtier (200) pour sceller ledit boîtier (200).

11. Paquet de batteries comportant:
une pluralité de batteries (10) selon la revendication 10, chacune de ladite pluralité de batteries (10) comportant des première et deuxième bornes de batterie (11, 12) ayant des polarités opposées, une desdites première et deuxième bornes de batterie (11, 12) étant une borne de batterie (110) comportant :
un segment de borne externe (111) fabriqué d'un premier matériau conducteur ;
un segment de borne interne (112) fabriqué d'un second matériau conducteur différent dudit premier matériau conducteur, ayant une extrémité supérieure connectée à une extrémité inférieure dudit segment de borne externe (111) pour former une partie de connexion entre ladite extrémité supérieure dudit segment de borne interne (112) et ladite extrémité inférieure dudit segment de borne externe (111) ; et
un élément de protection contre la corrosion (113) autour de ladite partie de connexion ; dans lequel l'un dudit segment de borne externe (111) et dudit segment de borne interne (112) est fabriqué d'aluminium et l'autre dudit segment de borne externe (111) et dudit segment de borne interne (112) est fabriqué de cuivre ; et dans lequel ledit élément de protection contre la corrosion (113) est formé sous la forme d'une couche protectrice formée par moulage par injection, pulvérisation ou dépôt électrolytique ; et l'autre desdites première et deuxième bornes (11, 12) de batterie est fabriqué dudit premier matériau conducteur ; et
un connecteur de batterie (20) dudit premier matériau conducteur ayant une première extrémité connectée à ladite première borne de batterie (11) d'une première batterie de batteries adjacentes et une seconde extrémité connectée à ladite deuxième borne de batterie (12) d'une seconde batterie des batteries adjacentes.

12. Paquet de batteries selon la revendication 11, dans lequel ledit élément de protection contre la corrosion (113) est fabriqué d'au moins un matériau choisi dans le groupe constitué par la résine perfluoro(alcoxyalcane), le polypropylène, polysulfure de phénylène, le polytétrafluoroéthylène, le polyfluorure de vinylidène et le polyphényléther, de préférence du polypropylène, du polysulfure de phénylène ou du polyphényléther.

13. Paquet de batteries selon la revendication 11, dans lequel ledit segment de borne externe (111) et ledit segment de borne interne (112) sont reliés par soudage ou par un joint à tenon.

14. Paquet de batteries selon la revendication 11, dans lequel ledit segment de borne externe (111) comporte un boulon de borne (1111) à son extrémité supérieure.
